# EUROPEAN PATENT SPECIFICATION

(11) **EP 3 113 271 B1**
(45) Date of publication and mention of the grant of the patent: **11.03.2020**
(21) Application number: 16176851.0
(22) Date of filing: 29.06.2016
(51) Int. Cl.: H01M 8/1023, H01M 8/0282, H01M 8/0284, C08L 83/04, H01M 8/1018, C08G 77/02, C08G 77/20

(54) **SEALING MATERIAL FOR SOLID POLYMER FUEL CELL SEPARATOR, SEPARATOR SEAL AND SEPARATOR**
DICHTUNGSMATERIAL FÜR FESTPOLYMER-BRENNSTOFFZELLEN-SEPARATOR, SEPARATORDICHTUNG UND SEPARATOR
MATÉRIAU D'ÉTANCHÉITÉ POUR SÉPARATEUR DE PILE À COMBUSTIBLE À POLYMÈRE SOLIDE, SÉPARATEUR ET SÉPARATEUR DE JOINT

(30) Priority: 30.06.2015 JP 2015130637
(43) Date of publication of application: 04.01.2017
(73) Proprietor: Shin-Etsu Chemical Co., Ltd., Tokyo (JP)
(72) Inventor: HOTTA, Masakatsu, Annaka-shi (JP)
(74) Representative: Mewburn Ellis LLP

(56) References cited:
- EP-A1- 1 693 398
- EP-A2- 1 453 127
- CN-A- 101 565 625
- JP-A- 2015 022 800

## Description

### TECHNICAL FIELD

This invention relates to a sealing material for separators in solid polymer fuel cells that can be used as small fuel cells. More specifically, the invention relates to a sealing material for solid polymer fuel cell separators which has an excellent durability to hydrogen fluoride that arises from electrolyte membranes made of fluoropolymer.

### BACKGROUND

The solid polymer fuel cell is under active investigation as an alternative technology to the internal combustion engine in vehicles and has already appeared in commercial vehicles. Among the components making up such solid polymer fuel cells, the separator is generally a flat plate on one or both sides of which are formed a plurality of parallel channels. The role of the separator is to conduct electricity generated at the gas diffusion electrodes within individual fuel cells to the exterior, discharge water produced within the channels in the course of electrical generation, and secure the channels as pathways for circulation of the reactant gases that flow into the individual fuel cells. It is desired that such fuel cell separators be made smaller. In addition, because numerous separators are stacked together and used, there exists a desire for separator sealing materials which have an excellent durability and are capable of long-term use.

The membrane electrode assembly (MEA), which is the electrical power-generating portion of the solid polymer fuel cell, has a fuel electrode (anode electrode)/electrolyte membrane/air electrode (cathode electrode) construction, with use being made for the most part of a fluoropolymer in the electrolyte membrane. The sealing material used in solid polymer fuel cell separators is required to have resistance to sulfuric acid and hydrofluoric acid that arise from this electrolyte membrane.

Silicone rubbers which are obtained by curing addition-reaction type liquid silicone rubber compositions and have excellent moldability, heat resistance and elasticity have been widely studied as sealing materials for solid polymer fuel cell separators, and JP-A 2002-309092 describes art for improving the acid resistance of sealing materials such as by adding a silicone resin. In addition, JP-A 2010-009903, JP No. 5365075 and JP-A 2014-160609 disclose art in which the compression set and adhesion of such sealing materials have been improved.

However, silicone rubbers are formed primarily of siloxane bonds (Si-O-Si) and it has been pointed out that when silicone rubber comes into contact with high-concentration hydrofluoric acid these siloxane bonds break, resulting in deterioration of the silicone rubber and a loss of sealing properties. One way to address this problem is to seal the outer periphery of the silicone rubber with ethylene-propylene rubber or fluororubber having excellent resistance to hydrofluoric acid (JP-A 2008-204819, JP No. 5162990). However, this approach has a number of drawbacks: it requires a larger number of production steps, is difficult to apply to complex shapes, and results in a lower heat resistance.

Our EP-A-1693398 describes curable perfluoropolyether rubber compositions, to make rubber or gel products useful for seals or sealants having low permeability to acidic gases and sulfur-containing gases. Generally suggested uses include rubber parts for automobiles, aircraft, chemical plants, printers, semiconductor manufacture, instruments and fuel cells. The perfluoropolyether rubbers are platinum-cured compositions; optionally the main perfluoropolyether polymer is given SiH terminals for reacting with organohydrogensiloxane crosslinking compound or curing agent. The compositions contain 0.1 to 50 parts by weight of inorganic powder which may be metal, hydrotalcite or active carbon.

CN101565625A describes fireproof silicone rubber sealing materials e.g. for sealing fire walls in aircraft manufacture. Flame-retardant powder material is included in addition-curing silicone rubber which is a 2-part composition (components A and B), each of A and B comprising polydimethylsiloxane base polymer, fire-retardant filler and reinforcing material while curing system and adhesive are divided between them. The fire-retardant filler is a combination of hydrotalcite, montmorillonite and expanded graphite.

### Citation List

Patent Document 1: JP-A 2002-309092
Patent Document 2: JP-A 2010-009903
Patent Document 3: JP No. 5365075
Patent Document 4: JP-A 2014-160609
Patent Document 5: JP-A 2008-204819
Patent Document 6: JP No. 5162990

### THE INVENTION

In the foregoing prior art, the sulfuric acid resistance of the silicone rubber itself is improved. To impart hydrofluoric acid resistance, the prior art also seals the periphery of the silicone rubber with another resin, although no solution in terms of the silicone rubber itself has hitherto been proposed. An aim herein is to provide a sealing material for solid polymer fuel cell separators that has a good or excellent hydrofluoric acid resistance. Further aspects are to provide a separator seal made of this sealing material and a separator in which the separator seal is used, which separator seal and separator can likewise have an excellent hydrofluoric acid resistance.

As a result of extensive investigations, the inventors have discovered that a sealing material for solid polymer fuel cell separators which includes a silicone rubber composition and, compounded therewith, a specific amount of a layered double hydroxide, specifically a hydrotalcite, has an improved durability to hydrofluoric acid.

Accordingly, in one aspect, the invention provides a sealing material for a solid polymer fuel cell separator as defined in claim 1. The sealing material includes a silicone rubber composition and, compounded therewith, a layered double hydroxide. The layered double hydroxide is magnesium and aluminum-containing hydrotalcite, and typically has been dehydrated by firing. The content of the layered double hydroxide in the sealing material is from 0.5 to 10 wt% per 100 wt% of the silicone rubber composition, exclusive of the layered double hydroxide.

The silicone rubber composition is a liquid addition-curable silicone rubber composition which includes (A) 100 parts by weight of an organopolysiloxane having at least two silicon atom-bonded alkenyl groups per molecule; (B) 0.5 to 20 parts by weight of an organohydrogenpolysiloxane having at least three silicon atom-bonded hydrogen atoms (Si-H groups) per molecule; (C) 5 to 30 parts by weight of fumed silica having a specific surface area as measured by the BET method of 50 to 400 m²/g; and (D) a catalytic amount of an addition reaction catalyst.

The solid polymer fuel cell in which the sealing material is used is preferably a solid polymer fuel cell having an electrolyte membrane containing a fluoropolymer with sulfonic acid groups.

In a second aspect (claim 10) the invention provides the use of a sealing material of the first aspect to provide a seal for a solid polymer fuel cell separator.

In a third aspect (claim 12) the invention provides a solid polymer fuel cell separator seal made of the sealing material according to the first aspect of the invention in a cured form.

In a fourth aspect (claim 13) the invention provides a solid polymer fuel cell separator obtained by forming the seal according to the second aspect of the invention as a sealing region at a peripheral edge on at least one side of a separator substrate.

In a fifth aspect (claim 15) the invention provides a solid polymer fuel cell comprising a separator sealed by a seal made of a cured sealing material

### ADVANTAGEOUS EFFECTS

We find that the materials disclosed herein are able to provide a sealing material for solid polymer fuel cell separators which has an excellent durability to hydrofluoric acid and which, even upon contact with hydrofluoric acid, incurs little weight loss and does not readily undergo surface deterioration. The invention also provides a separator seal made of the sealing material and a separator in which the separator seal is used, which separator seal and separator can be endowed with these same properties.

### FURTHER EXPLANATIONS; OPTIONS AND PREFERENCES

The objects, features and advantages of the invention will become more apparent from the following detailed description.

### Layered Double Hydroxide

This invention pertains to a sealing material for a solid polymer fuel cell separator, which sealing material includes a silicone rubber composition and, compounded therewith, a layered double hydroxide. Layered double hydroxides have an anion exchange capability and are known to adsorb the following elements: fluorine, boron, arsenic, chromium and selenium. The use, by exploiting this property, of layered double hydroxides as agents for immobilizing harmful metals present in wastewater, ground water and the soil is also under investigation. In our proposals one type of layered double hydroxide may be used alone or two or more types may be used in suitable combination. From the standpoint of increasing the durability to hydrofluoric acid, magnesium and aluminum-containing hydrotalcite is used.

Hydrotalcites are of general formula (1) below, including synthetic hydrotalcites.

[M¹₁₋ₓM²ₓ(OH)₂]^{x+} [(Aⁿ⁻)_{x/n}·αH₂O]^{x+} (1)

Here, M¹ is a divalent metal ion, M² is a trivalent metal ion, Aⁿ⁻ is an n-valent anion, 0.20 ≤ x ≤ 0.33, and α is an integer. Examples of M¹ include divalent metal ions such as Mg²⁺, Ca²⁺, Zn²⁺, Co²⁺, Ni²⁺, Cu²⁺ and Mn²⁺; examples of M² include trivalent metal ions such as Al³⁺, Fe³⁺ and Cr³⁺; and examples of Aⁿ⁻ include n-valent anions such as OH⁻, Cl⁻, CO₃²⁻ and SO₄²⁻. Herein, hydrotalcites in which M¹ is Mg²⁺, M² is Al³⁺ and Aⁿ⁻ is CO₃²⁻ are relevant.

Specific examples include 1.25 Mg(OH)₂·Al(OH)₃·zCO₃·αH₂O, Mg₆Al₂(OH)₁₆CO₃·4H₂O and Mg_{4.5}Al₂(OH)₁₃CO₃·3.5H₂O. Of these, Mg₆Al₂(OH)₁₆CO₃·4H₂O is especially preferred.

In the practice of this invention, the hydrotalcite may be non-dehydrated hydrotalcite or hydrotalcite that has been dehydrated, usually by firing. When hydrotalcite that has adsorbed a lot of water is used, the water evaporates during hot molding of the silicone rubber and may give rise to foaming or molding defects. Hence, hydrotalcite that has been dehydrated by firing is preferred. When hydrotalcite is fired, interlayer dehydration begins at about 200°C, a layer oxide forms at 500°C and above, and decomposition occurs at 900°C and above. Hence, the firing temperature for the hydrotalcite added to the silicone rubber composition is preferably at or above the molding temperature of 200°C and 700°C or below, at which the layered structure does not break down.

The layered double hydroxide is of course particulate and preferably has a primary particle size of 0.01 to 30 µm, more preferably 0.01 to 10 µm. By setting the primary particle size to at least 0.01 µm, kneading of the material is not difficult. By setting the primary particle size to not more than 30 µm, the dispersibility is good, resulting in a further improvement in the sealing performance.

The amount of layered double hydroxide included is from 0.5 to 10 wt% per 100 wt% of the silicone rubber composition, exclusive of the layered double hydroxide. Within this range, the effects of including the layered double hydroxide are better achieved. Including layered double hydroxide in an amount of more than 20 wt% may lower the flowability of the silicone rubber composition after compounding and may lead to a decline in the sealing performance due to excessive hardening.

### Silicone Rubber Composition

The layered double hydroxide-containing silicone rubber composition is an addition curable-type liquid silicone rubber composition. More specifically, an addition curable-type liquid silicone rubber composition which includes an alkenyl group-containing compound and a Si-H group-containing compound, and which has self-flowability at room temperature (25°C) is preferred. A composition formulated as follows is used:
(A) 100 parts by weight of an organopolysiloxane having at least two silicon atom-bonded alkenyl groups per molecule;
(B) 0.5 to 20 parts by weight of an organohydrogenpolysiloxane having at least three silicon atom-bonded hydrogen atoms (Si-H groups) per molecule;
(C) 5 to 30 parts by weight of fumed silica having a specific surface area as measured by the BET method of 50 to 400 m²/g; and
(D) a catalytic amount of an addition reaction catalyst.

### Component (A):

The organopolysiloxane having at least two silicon atom-bonded alkenyl groups per molecule is a base polymer that forms an elastic sealing layer (cured silicone rubber). Compounds of average compositional formula (I) below can be used as this organopolysiloxane.

R¹ₐSiO_{(4-a)/2} (I)

In formula (I), each R¹ is the same or a different substituted or unsubstituted monovalent hydrocarbon group of 1 to 10, preferably 1 to 8, carbon atoms; and the letter "a" is a positive number in the range of 1.5 to 2.8, preferably 1.8 to 2.5, and more preferably 1.95 to 2.05.

Illustrative examples of the substituted or unsubstituted monovalent hydrocarbon group represented here by R¹ include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and any of these groups in which some or all of the hydrogen atoms are substituted with halogen atoms (e.g. fluorine, bromine, chlorine), cyano groups or the like, such as chloromethyl, chloropropyl, bromoethyl, trifluoropropyl and cyanoethyl. However, it is preferable for at least 90% of all the R¹ groups, and especially all R¹ groups exclusive of alkenyl groups, to be methyl groups.

It is essential for at least two R¹ groups to be alkenyl groups (preferably alkenyl groups having from 2 to 8 carbon atoms, more preferably alkenyl groups having from 2 to 6 carbon atoms, and most preferably vinyl groups). The content of alkenyl groups in the organopolysiloxane is preferably from 5.0×10⁻⁶ mol/g to 5.0×10⁻³ mol/g, and more preferably from 1.0×10⁻⁵ mol/g to 1.0×10⁻³ mol/g. At an alkenyl group content below 5.0×10⁻⁶ mol/g, the rubber hardness may be low and a sufficient sealing ability may not be obtained. On the other hand, at a content above 5.0×10⁻³ mol/g, the crosslink density may be too high, which may result in a brittle rubber.

The alkenyl groups may be bonded to silicon atoms at the ends of the molecular chain, may be bonded to silicon atoms partway along the molecular chain, or may be bonded to both. An organopolysiloxane having alkenyl groups bonded to silicon atoms on at least both ends of the molecular chain is preferred.

It is preferable for the organopolysiloxane to have a structure which is basically a linear structure, although the organopolysiloxane may have a branched structure, a cyclic structure or a three-dimensional network structure. The molecular weight is not particularly limited, the use of anything from a liquid organopolysiloxane having a low viscosity at room temperature (25°C) to a highly viscous gum-type organopolysiloxane being possible, although the organopolysiloxane has a weight-average degree of polymerization of preferably from 100 to 2,000, and more preferably from 150 to 1,500. At a weight-average degree of polymerization below 100, the cured silicone rubber has a poor elasticity, as a result of which a sufficient sealing ability may not be achieved. On the other hand, at above 2,000, the silicone rubber composition becomes highly viscous, which may make molding difficult to carry out. In cases where this organopolysiloxane has a three-dimensional network structure, for the above reasons, it is more preferable for the organopolysiloxane to have a weight-average molecular weight of not more than 100,000, typically from 3,000 to 100,000, and especially from about 5,000 to about 50,000. The weight-average degree of polymerization or weight-average molecular weight can generally be determined as the polystyrene equivalent value in molecular weight distribution (degree of polymerization distribution) measurement by gel permeation chromatographic (GPC) analysis using toluene as the developing solvent.

### Component (B):

The organohydrogenpolysiloxane having at least three silicon atom-bonded hydrogen atoms (Si-H groups) per molecule acts as a crosslinking agent that effects crosslinking by a hydrosilyl addition reaction between the Si-H groups on the molecule and silicon atom-bonded alkenyl groups in component (A), thus curing the composition.

The organohydrogenpolysiloxane serving as component (B) preferably has average compositional formula (II) below.

R²_{b}H_{c}SiO_{(4-b-c)/2} (II)

In formula (II), each R² is the same or a different substituted (preferably halogen-substituted) or unsubstituted monovalent hydrocarbon group of 1 to 10, preferably 1 to 8, carbon atoms. Also, b is a positive number from 0.7 to 2.1, c is a positive number from 0.001 to 1.0, and b+c is a positive number from 0.8 to 3.0. This organohydrogenpolysiloxane has at least 3, generally 3 to 300, preferably 3 to 100, and more preferably 3 to 50, silicon atom-bonded hydrogen atoms (Si-H groups) per molecule.

Here, the substituted (preferably halogen-substituted) or unsubstituted monovalent hydrocarbon groups represented by R² are exemplified by the same groups as mentioned above for R¹, with groups that, unlike alkenyl groups, have no aliphatic unsaturated bonds being preferred. Also, b is preferably from 0.8 to 2.0, c is preferably from 0.01 to 1.0, and b+c is preferably from 1.0 to 2.5.

The organohydrogenpolysiloxane serving as component (B) generally has no functional groups other than Si-H groups (such as alkenyl groups, epoxy groups and polyvalent aromatic rings such as phenylene groups) on the molecule.

The molecule structure of the organohydrogenpolysiloxane may be a linear, cyclic, branched or three-dimensional network structure. Preferred use can be made of an organohydrogenpolysiloxane in which the number of silicon atoms on the molecule or the degree of polymerization is typically from 2 to 300, especially from 4 to 150, and which is liquid at room temperature (25°C) (the viscosity at 25°C typically being 1,000 mPa·s or less, and preferably from about 0.1 to about 500 mPa·s). This viscosity is a value obtained with a rotational viscometer such as a BL, BH, BS or cone-and-plate type viscometer. The silicon atom-bonded hydrogen atoms may be positioned at the ends of the molecular chain, partway along the molecular chain, or in both such places.

Illustrative examples of the organohydrogenpolysiloxane of component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane,
methylhydrogensiloxane-dimethylsiloxane cyclic copolymers, methylhydrogenpolysiloxane capped at both ends with trimethylsiloxy groups,
dimethylsiloxane-methylhydrogensiloxane copolymers capped at both ends with trimethylsiloxy groups, dimethylpolysiloxane capped at both ends with dimethylhydrogensiloxy groups,
dimethylsiloxane-methylhydrogensiloxane copolymers capped at both ends with dimethylhydrogensiloxy groups, methylhydrogensiloxane-diphenylsiloxane copolymers capped at both ends with trimethylsiloxy groups,
methylhydrogensiloxane-diphenylsiloxane-dimethylsiloxane copolymers capped at both ends with trimethylsiloxy groups, methylhydrogensiloxane-methylphenylsiloxane-dimethylsiloxane copolymers capped at both ends with trimethylsiloxy groups, methylhydrogensiloxane-dimethylsiloxane-diphenylsiloxane copolymers capped at both ends with dimethylhydrogensiloxy groups,
methylhydrogensiloxane-dimethylsiloxane-methylphenylsiloxane copolymers capped at both ends with dimethylhydrogensiloxy groups,
copolymers consisting of (CH₃)₂HSiO_{1/2} units and SiO_{4/2} units, copolymers consisting of (CH₃)₂HSiO_{1/2} units, SiO_{4/2} units and (C₆H₅)SiO_{3/2} units, and
any of the above compounds in which some or all of the methyl groups are substituted with other alkyl groups, phenyl groups or the like.

This organohydrogenpolysiloxane serving as component (B) is included in an amount, per 100 parts by weight of component (A), of from 0.5 to 20 parts by weight, and preferably 0.6 to 15 parts by weight. It is especially preferable to include component (B) in an amount such that the molar ratio between the amount of alkenyl groups in component (A) and the amount of silicon atom-bonded hydrogen atoms (Si-H groups) in component (B), expressed as the ratio (Si-H functional groups)/(alkenyl groups), is from 0.8 to 3.0, and especially from 1.0 to 1.5. When this ratio is smaller than 0.8 or larger than 3.0, the resulting cured rubber may have an increased compression set and the sealing properties may be inadequate.

### Component (C):

The fumed silica serving as component (C) is essential for imparting sufficient strength to the silicone rubber. The fumed silica has a specific surface area, as measured by the BET method, of from 50 to 400 m²/g, and preferably from 100 to 350 m²/g. At less than 50 m²/g, the acid resistance worsens, whereas at more than 400 m²/g, the compression set increases. The fumed silica may be used directly as is, although it is preferably used after pretreatment with a treatment agent that renders the surface hydrophobic, or with treatment that entails adding a surface treatment agent at the time of mixture with component (A). Any known surface treatment agent such as an alkyl alkoxysilane, alkyl chlorosilane, alkyl silazane, silane coupling agent, titanate treatment agent or fatty acid ester may be used alone, or any two or more such agents may be used at the same time or under different timing.

The fumed silica is included in an amount, per 100 parts by weight of component (A), of from 5 to 30 parts by weight, preferably 10 to 30 parts by weight, and more preferably 12 to 28 parts by weight. By including at least 5 parts by weight of the fumed silica, a rubber strength that is more satisfactory can be obtained. However, at more than 30 parts by weight, the compression set may increase and the sealing properties may worsen.

### Component (D):

The addition reaction catalyst serving as component (D) is a hydrosilylation catalyst for carrying out an addition reaction between alkenyl groups on the organopolysiloxane serving as component (A) and silicon atom-bonded hydrogen atoms (Si-H groups) on the organohydrogenpolysiloxane serving as component (B). The addition reaction catalyst is exemplified by platinum family metal-based catalysts, including platinum-based catalysts such as platinum black, platinic chloride, chloroplatinic acid, reaction products of chloroplatinic acid with monohydric alcohols, complexes of chloroplatinic acid and olefins, and platinum bisacetoacetate; palladium-based catalysts, and rhodium-based catalysts. Platinum-based catalysts are especially preferred.

The catalyst should be added in an amount that can promote the addition reaction; that is, a catalytic amount. Expressed in terms of the amount of platinum family metal (weight basis) with respect to component (A), the amount is preferably from 0.5 to 1,000 ppm, and more preferably from about 1 ppm to about 500 ppm. At less than 0.5 ppm, the addition reaction is not fully promoted and curing may be inadequate. On the other hand, the addition of more than 1,000 ppm may have no further effect on reactivity and therefore may not be cost-effective.

For excellent acid resistance, it is preferable to include a resinous copolymer (that is, a silicone resin) in the silicone rubber composition. This resinous copolymer is a vinyl group-containing organopolysiloxane component that is substantially in the form of a three-dimensional resin and consists primarily of R³₃SiO_{1/2} units (monofunctional siloxy units) and SiO₂ units. Here, R³ is a substituted or unsubstituted monovalent hydrocarbon group having preferably 1 to 10, and more preferably, 1 to 8, carbon atoms. Illustrative examples of the monovalent hydrocarbon group represented by R³ include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and any of these groups in which some or all of the hydrogen atoms are substituted with halogen atoms (e.g. fluorine, bromine, chlorine), cyano groups or the like, such as chloromethyl, chloropropyl, bromoethyl, trifluoropropyl and cyanoethyl.

The resinous copolymer may consist only of the above R³₃SiO_{1/2} units and SiO₂ units or, where necessary, may include also R³₂SiO_{2/2} units (difunctional siloxane units, with R³ being independently the same as the R³ described above) and R³SiO_{3/2} units (trifunctional siloxane units, with R³ being independently the same as the R³ described above) in a combined amount, relative to the total copolymer weight, of up to 50 wt% (0 to 50 wt%), preferably up to 40 wt% (0 to 40 wt%), and more preferably up to 20 wt% (0 to 20 wt%). The R³₃SiO_{1/2} units and the SiO₂ units serving as the essential constituent units are in a ratio [R³₃SiO_{1/2}/SiO₂] of preferably 0.5 to 1.5, and more preferably 0.5 to 1.3. By setting this ratio to 0.5 or more, the acid resistance improves. On the other hand, at a ratio larger than 1.5, the compression set may increase.

In addition, the resinous copolymer may include from 1×10⁻⁴ to 5×10⁻³ mol/g, and especially from 2×10⁻⁴ to 3×10⁻³ mol/g, of vinyl groups as a portion of the R³ groups. By setting this amount to at least 1×10⁻⁴ mol/g, the acid resistance is further increased. On the other hand, at more than 5×10⁻³ mol/g, the rubber may become hard and brittle.

From the standpoint of increasing the acid resistance, the resinous copolymer has a polystyrene-equivalent weight-average molecular weight Mw, based on gel permeation chromatography (GPC), of preferably from 1,000 to 10,000, and especially from 2,000 to 8,500. By setting the weight-average molecular weight to 1,000 or more, a higher acid resistance can be obtained. However, at above 10,000, the productivity and the blendability with the silicone rubber composition may decline; hence, the weight-average molecular weight is preferably not more than 10,000.

The resinous copolymer can generally be prepared by hydrolyzing a suitable chlorosilane or alkoxysilane by a method known to the art.

Such resinous copolymers are included in an amount, per 100 parts by weight of component (A), of preferably 5 to 50 parts by weight, and more preferably 5 to 40 parts by weight. By setting the amount in this range, the acid resistance increases. However, including more than 50 parts by weight may result in a larger compression set.

Other ingredients that may be optionally included in the silicone rubber composition include reinforcements such as precipitated silica and silicone resin; fillers such as quartz powder, diatomaceous earth and calcium carbonate; hydrosilylation reaction regulators such as nitrogen-containing compounds, acetylene compounds, phosphorus compounds, nitrile compounds, carboxylates, tin compounds, mercury compounds, sulfur compounds and ethynyl cyclohexanol; heat stabilizers such as iron oxide and cerium oxide; internal mold lubricants such as dimethyl silicone oil; tackifiers; and thixotropic agents.

The amount of the layered double hydroxide included per 100 parts by weight of component (A) is preferably up to 30 parts by weight, more preferably up to 15 parts by weight.

### Sealing Material for Solid Polymer Fuel Cell Separator

This invention uses the above silicone rubber composition formulated with layered double hydroxide as a sealing material for solid polymer fuel cell separators.

The sealing material for a solid polymer fuel cell separator (silicone rubber composition formulated with a layered double hydroxide) can be prepared by, for example, uniformly mixing together above components (A) to (D), the layered double hydroxide, and also optional ingredients as needed. The resulting material (silicone rubber composition) should have a viscosity at room temperature (25°C) of generally from 20 to 5,000 Pa·s, and preferably about 30 to about 1,000 Pa·s. The viscosity can be measured with a rotational viscometer.

### Seal for Solid Polymer Fuel Cell Separator, and Solid Polymer Fuel Cell Separator

The seal for a solid polymer fuel cell separator is a cured product obtained by curing the sealing material for a solid polymer fuel cell separator (silicone rubber composition formulated with a layered double hydroxide).

A seal is formed by applying the sealing material (silicone rubber composition formulated with a layered double hydroxide) on at least one side of a solid polymer fuel cell separator substrate and curing the applied material. Exemplary methods of application include methods that mold the silicone rubber composition into a sealing shape by compression molding, casting, injection molding or the like, and then combine the molded seal with the separator; and methods for obtaining an integrally united separator and sealing material by dipping, coating, screen printing, insert molding or the like.

The curing temperature of the above material (silicone rubber composition formulated with layered double hydroxide) can be suitably selected from room temperature (25°C) to elevated temperatures, although curing and molding are generally carried out at between 100 and 220°C for 10 seconds to 2 hours, and preferably between 120 and 200°C for about 20 seconds to about 30 minutes. After the silicone rubber composition has been cured and molded (i.e. after primary curing), a post cure (secondary curing) may be carried out to improve adhesion and the compression set of the cured product. The post curing conditions are generally between 100 and 220°C for 30 minutes to 100 hours, and preferably between 120 and 200°C for about 1 to about 8 hours.

The seal obtained with the above cured product has a thickness of generally from 50 to 5,000 µm, and preferably from about 100 to about 3,000 µm.

Metals that can be used as the separator substrate include aluminum, iron, copper, zinc, nickel, stainless steel and brass. However, because acid resistance is required, preferred use can be made of a metal having corrosion resistance, such as stainless steel, or of a surface-modified metal. Organic resins that can be used as the separator substrate include ordinary thermoplastic resins obtained by olefin polymerization or polycondensation, and thermoset resins such as epoxy resins. To lower the electrical resistance, these resins may have high loadings of an electrically conductive filler such as carbon. Illustrative examples of organic resins include urethane (PU) resins, styrene resins, acrylic resins, polyethylene terephthalate (PET) resins, polybutylene terephthalate (PBT) resins, epoxy resins, phenolic resins, polyphenylene oxide resins, polyphenylene sulfide resins, polysulfone resins, nylon resins, aromatic polyamide resins, polyimide resins and liquid crystal resins.

### Solid Polymer Fuel Cell

The key feature of the solid polymer fuel cell of the invention is the use of the above-described silicone rubber composition formulated with a layered double hydroxide as the seal; known components may be used in other parts of the construction. Although the electrolyte membrane of the fuel cell is not particularly limited, when a fluoropolymer having sulfonic acid groups is used, the advantageous effects of the inventive seal having resistance to both the sulfuric acid and the hydrofluoric acid that arise from this electrolyte membrane can be better manifested. Examples of fluoropolymers having sulfonic acid groups include the copolymer of tetrafluoroethylene and perfluoro[2-(fluorosulfonylethoxy)propyl vinyl ether]. This copolymer is exemplified by Nafion™ from E.I. DuPont de Nemours & Co.

### EXAMPLES

Working Examples and Comparative Examples are given below by way of illustration and not by way of limitation.

### Working Examples 1 to 4, Comparative Examples 1 and 2

A layered double hydroxide or cerium hydroxide was added in the weight ratio (wt%) shown in the tables below per 100 wt% of the silicone rubber composition, exclusive of the hydrotalcite or cerium hydroxide content. The following evaluations were carried out on the cured forms of the resulting silicone rubber compositions formulated with a layered double hydroxide or cerium hydroxide.
Working Examples: Layered Double Hydroxide
   Non-dehydrated hydrotalcite of general formula Mg₆Al₂(CO₃)(OH)₁₆·4H₂O (primary particle size, about 0.2 µm)
   Hydrotalcite dehydrated by firing and having general formula Mg₆Al₂O₉ (firing temperature, about 500°C; primary particle size, about 1 µm)
Comparative Examples: Cerium hydroxide
   (which reportedly has an ability to adsorb fluorine; primary particle size = 0.5 µm)

### Silicone Rubber Composition

The following ingredients were mixed together at room temperature for 30 minutes: 70 parts by weight of (A) dimethylpolysiloxane capped at both ends of the molecular chain with dimethylvinylsiloxy groups and having a weight-average degree of polymerization of 500, 12 parts by weight of a resinous copolymer having a three-dimensional network structure consisting of (CH₃)₃SiO_{1/2} units, CH₂=CH(CH₃)₂SiO_{1/2} units, SiO₂ units and (CH₃)₂SiO units ([ (CH₃)₃SiO_{1/2} units + CH₂=CH(CH₃)₂SiO_{1/2} units]/SiO₂ units = 0.79; (CH₃)₂SiO unit content, 15 wt%; vinyl unit content = 0.00022 mol/g; weight-average molecular weight = 6,200), 25 parts by weight of (C) fumed silica having a specific surface area of 200 m²/g (Aerosil 200, from Nippon Aerosil Co., Ltd.), 5 parts by weight of hexamethyldisilazane, 0.2 part by weight of divinyltetramethyldisilazane, and 2.0 parts by weight of water. The temperature of the mixture was then raised to 150°C, stirring was continued for 3 hours, and the system was cooled. Next, 20 parts by weight of (A) dimethylpolysiloxane capped at both ends with dimethylvinylsiloxy groups and having a weight-average degree of polymerization of 200 was mixed therein, after which hydrotalcite or cerium hydroxide was added in their respective specific amounts and the resulting mixture was passed once through a three-roll mill, giving a silicone rubber base. The following were then added to 127 parts by weight of this silicone rubber base, exclusive of the amount of hydrotalcite or cerium hydroxide included therein: 3.5 parts by weight of methylhydrogenpolysiloxane having Si-H groups at both ends and on side chains (degree of polymerization, 20; Si-H group content, 0.0044 mol/g) as the crosslinking agent (B), such as to give a (Si-H group)/(alkenyl group) ratio of 1.2, and 0.05 part by weight of ethynyl cyclohexanol as a reaction regulator. Stirring was then continued for 15 minutes, and 0.1 part by weight of (D) a platinum catalyst (Pt concentration, 1 wt%) was mixed in, thereby giving a liquid silicone rubber composition.

### Formation of Cured Product

The silicone rubber composition was press molded (120°C, 10 minutes) to form a 2.0 mm thick silicone rubber sheet which was then post-cured in an oven at 200°C for 4 hours.

### Hydrofluoric Acid Resistance Test

A No. 2 dumbbell (JIS K 6249) was punched from the silicone rubber sheet to give a test piece. An immersion solution having a hydrogen fluoride concentration of 500 ppm (weight) was prepared by adding 60 wt% hydrofluoric acid to aqueous sulfuric acid having a pH of 2. The test piece was immersed in the immersion solution for 168 hours at 95°C. Following the immersion test, the test piece was thoroughly rinsed with pure water and dried at 120°C for 2 hours. The weight (percent weight change, based on a value of 100 wt% for the test piece prior to the immersion test) and surface state of the test piece before and after the immersion test were compared. The test was carried out on three test pieces under each set of conditions, and the intermediate value was used as the weight change.

**Table 1**

| | Working Example 1 | Working Example 2 | Working Example 3 | Working Example 4 |
|---|---|---|---|---|
| Formulation | unfired hydrotalcite | unfired hydrotalcite | hydrotalcite dehydrated by firing | hydrotalcite dehydrated by firing |
| Amount included | 2.0 wt% | 10.0 wt% | 2.0 wt% | 10.0 wt% |
| Weight change at hydrogen fluoride concentration of 500 ppm | -0.3 % | -0.4 % | -0.1 % | -0.0 % |

**Table 2**

| | Comparative Example 1 | Comparative Example 2 |
|---|---|---|
| Formulation | not added | cerium hydroxide |
| Amount included | - | 2.0 wt% |
| Weight change at hydrogen fluoride concentration of 500 ppm | -0.8 % | -1.7 % |

### Results

The addition of a layered double hydroxide was confirmed to suppress the weight loss following the acid resistance test and also to alleviate roughening of the surface. With the use in particular of hydrotalcite dehydrated by firing, the weight loss was even smaller.

### Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the sealing material, use, seal, separator and fuel cell constitutes the proposal of general combinations of those general preferences and options for the different features, insofar as they are combinable and compatible and are put forward in the same context.

Although some preferred embodiments have been described, many modifications and variations may be made thereto in the light of the above teachings. It is therefore to be understood that the invention may be practised otherwise than as specifically described without departing from the scope of the claims.

## Claims

1. A sealing material for a solid polymer fuel cell separator comprising a silicone rubber composition and layered double hydroxide compounded therewith,
- the silicone rubber composition being a liquid addition-curable silicone rubber composition comprising:
(A) 100 parts by weight of organopolysiloxane having at least two silicon atom-bonded alkenyl groups per molecule;
(B) 0.5 to 20 parts by weight of organohydrogenpolysiloxane having at least three silicon atom-bonded hydrogen atoms per molecule;
(C) 5 to 30 parts by weight of fumed silica having a specific surface area as measured by the BET method of 50 to 400 m²/g and
(D) a catalytic amount of addition reaction catalyst;
- the layered double hydroxide being magnesium and aluminum-containing hydrotalcite, and
- the content of the layered double hydroxide being from 0.5 to 10 wt%, relative to the silicone rubber composition excluding the layered double hydroxide as 100 wt%.

2. A sealing material of claim 1 wherein the layered double hydroxide is a dehydrated hydrotalcite.

3. A sealing material of claim 2 wherein the layered double hydroxide is fired hydrotalcite.

4. A sealing material of any one of the preceding claims wherein the layered double hydroxide has a primary particle size of 0.01 to 10 µm.

5. A sealing material of any one of the preceding claims wherein the layered double hydroxide is Mg₆Al₂(CO₃)(OH)₁₆·4H₂O or Mg₆Al₂O₉.

6. A sealing material of any one of the preceding claims wherein the silicone rubber composition comprises a resinous copolymer which is a silicone resin, being a vinyl group-containing organopolysiloxane component consisting primarily of R³₃SiO_{1/2} units and SiO₂ units where R³ is substituted or unsubstituted monovalent hydrocarbon group having 1 to 10 carbon atoms.

7. A sealing material of claim 6 wherein the resinous copolymer has a polystyrene-equivalent weight-average molecular weight Mw, based on gel permeation chromatography (GPC), of from 1,000 to 10,000.

8. A sealing material of claim 6 or 7 wherein the resinous copolymer is included in the silicone rubber composition in an amount of 5 to 50 parts by weight per 100 parts by weight of component (A).

9. A sealing material of any of the preceding claims wherein organopolysiloxane component (A) is selected from compounds of average compositional formula (I):
R¹ₐSiO_{(4-a)/2} (I)
wherein each R¹ is the same or a different substituted or unsubstituted monovalent hydrocarbon group of 1 to 10 carbon atoms and "a" is a number in the range 1.5 to 2.8, and wherein at least 90% of all the R¹ groups in the organopolysiloxane component (A), excluding the alkenyl groups, are methyl groups.

10. Use of a sealing material of any one of claims 1 to 9 to provide a seal for a solid polymer fuel cell separator.

11. Use according to claim 10 comprising applying the sealing material on at least one side of a solid polymer fuel cell separator substrate and curing the applied material.

12. A solid polymer fuel cell separator seal comprising a sealing material of any one of claims 1 to 9 in a cured form.

13. A solid polymer fuel cell separator obtainable by forming a seal of claim 12 as a sealing region at a peripheral edge on at least one side of a separator substrate.

14. A solid polymer fuel cell comprising a separator sealed by a seal made of a cured sealing material according to any one of claims 1 to 9.

15. A solid polymer fuel cell of claim 14 which comprises an electrolyte membrane containing a fluoropolymer having sulfonic acid groups.

## Patentansprüche

1. Dichtungsmaterial für einen Festpolymer-Brennstoffzellenseparator, das eine Silikonkautschukzusammensetzung und ein damit vermischtes geschichtetes Doppelhydroxid umfasst, wobei
- die Silikonkautschukzusammensetzung eine flüssige, additionshärtbare Silikonkautschukzusammensetzung ist, die Folgendes umfasst:
(A) 100 Gewichtsteile Organopolysiloxan mit zumindest zwei an Siliciumatome gebundenen Alkenylgruppen pro Molekül;
(B) 0,5 bis 20 Gewichtsteile Organohydrogenpolysiloxan mit zumindest drei an Siliciumatome gebundenen Wasserstoffatomen pro Molekül;
(C) 5 bis 30 Gewichtsteile pyrogenes Siliciumdioxid mit einer nach dem BET-Verfahren gemessenen spezifischen Oberfläche von 50 bis 400 m²/g; und
(D) eine katalytische Menge eines Additionsreaktionskatalysators;
- das geschichtete Doppelhydroxid Magnesium und Aluminium enthaltender Hydrotalkit ist; und
- der Gehalt an geschichtetem Doppelhydroxid, bezogen auf die Silikonkautschukzusammensetzung ohne das geschichtete Doppelhydroxid als 100 Gew.-%, 0,5 bis 10 Gew.-% beträgt.

2. Dichtungsmaterial nach Anspruch 1, wobei das geschichtete Doppelhydroxid ein dehydratisierter Hydrotalkit ist.

3. Dichtungsmaterial nach Anspruch 2, wobei das geschichtete Doppelhydroxid gebrannter Hydrotalkit ist.

4. Dichtungsmaterial nach einem der vorangegangenen Ansprüche, wobei das geschichtete Doppelhydroxid eine Primärteilchengröße von 0,01 bis 10 µm aufweist.

5. Dichtungsmaterial nach einem der vorangegangenen Ansprüche, wobei das geschichtete Doppelhydroxid M₉₆Al₂(CO₃)(OH)₁₆·4H₂O oder Mg₆Al₂O₉ ist.

6. Dichtungsmaterial nach einem der vorangegangenen Ansprüche, wobei die Silikonkautschukzusammensetzung ein Harz-Copolymer umfasst, das ein Silikonharz ist, wobei es sich um eine vinylgruppenhaltige Organopolysiloxankomponente handelt, die hauptsächlich aus R³₃SiO_{1/2}-Einheiten und SiO₂-Einheiten besteht, worin R³ eine substituierte oder unsubstituierte einwertige Kohlenwasserstoffgruppe mit 1 bis 10 Kohlenstoffatomen ist.

7. Dichtungsmaterial nach Anspruch 6, wobei das Harz-Copolymer ein gewichtsmittleres Polystyroläquivalent-Molekulargewicht Mw, auf Basis von Gelpermeationschromatographie (GPC), zwischen 1.000 und 10.000 aufweist.

8. Dichtungsmaterial nach Anspruch 6 oder 7, wobei das Harz-Copolymer in der Silikonkautschukzusammensetzung in einer Menge von 5 bis 50 Gewichtsteilen pro 100 Gewichtsteile der Komponente (A) enthalten ist.

9. Dichtungsmaterial nach einem der vorangegangenen Ansprüche, wobei die Organopolysiloxankomponente (A) aus Verbindungen der mittleren Zusammensetzungsformel (I) ausgewählt ist:
R¹ₐSiO_{(4-a)/2} (I)
worin die R¹ jeweils die gleiche oder eine andere substituierte oder unsubstituierte einwertige Kohlenwasserstoffgruppe mit 1 bis 10 Kohlenstoffatomen sind und "a" eine Zahl im Bereich von 1,5 bis 2,8 ist, und worin zumindest 90 % aller Gruppen R¹ in der Organopolysiloxankomponente (A) mit Ausnahme der Alkenylgruppen Methylgruppen sind.

10. Verwendung eines Dichtungsmaterials nach einem der Ansprüche 1 bis 9, um eine Dichtung für einen Festpolymer-Brennstoffzellenseparator bereitzustellen.

11. Verwendung nach Anspruch 10, umfassend das Aufbringen des Dichtungsmaterials auf zumindest einer Seite eines Festpolymer-Brennstoffzellenseparator-Substrats und das Härten des aufgebrachten Materials.

12. Dichtung für einen Festpolymer-Brennstoffzellenseparator, die ein Dichtungsmaterial nach einem der Ansprüche 1 bis 9 in gehärteter Form umfasst.

13. Festpolymer-Brennstoffzellenseparator, der durch Ausbilden einer Dichtung nach Anspruch 12 als Dichtungsabschnitt an einem Umfangsrand auf zumindest einer Seite eines Separatorsubstrats erhältlich ist.

14. Festpolymer-Brennstoffzelle, die einen Separator umfasst, der mit einer Dichtung abgedichtet ist, die aus einem gehärteten Dichtungsmaterial nach einem der Ansprüche 1 bis 9 besteht.

15. Festpolymer-Brennstoffzelle nach Anspruch 14, die eine Elektrolytmembran umfasst, die ein Fluorpolymer enthält, das Sulfonsäuregruppen aufweist.

## Revendications

1. Matériau d'étanchéité pour un séparateur de pile à combustible polymère solide comprenant une composition de caoutchouc siliconé et un hydroxyde double couche combiné avec celle-ci,
- la composition de caoutchouc siliconé étant une composition de caoutchouc siliconé durcissable par addition liquide comprenant :
(A) 100 parties en poids d'organopolysiloxane ayant au moins deux groupes alcényle liés à un atome de silicium par molécule ;
(B) 0,5 à 20 parties en poids d'organohydrogéno-polysiloxane ayant au moins trois atomes d'hydrogène liés à un atome de silicium par molécule ;
(C) 5 à 30 parties en poids de silice fumée ayant une surface spécifique, mesurée par la méthode BET, de 50 à 400 m²/g ; et
(D) une quantité catalytique de catalyseur de réaction d'addition ;
- l'hydroxyde double couche étant une hydrotalcite contenant du magnésium et de l'aluminium, et
- la teneur en l'hydroxyde double couche étant de 0,5 à 10 % en poids par rapport à la composition de caoutchouc siliconé à l'exclusion de l'hydroxyde double couche, qui est de 100 % en poids.

2. Matériau d'étanchéité selon la revendication 1, dans lequel l'hydroxyde double couche est une hydrotalcite déshydratée.

3. Matériau d'étanchéité selon la revendication 2, dans lequel l'hydroxyde double couche est une hydrotalcite cuite.

4. Matériau d'étanchéité selon l'une quelconque des revendications précédentes, dans lequel l'hydroxyde double couche a une granulométrie primaire de 0,01 à 10 µm.

5. Matériau d'étanchéité selon l'une quelconque des revendications précédentes, dans lequel l'hydroxyde double couche est Mg₆Al₂(CO₃)(OH)₁₆•4H₂O ou Mg₆Al₂O₉.

6. Matériau d'étanchéité selon l'une quelconque des revendications précédentes, dans lequel la composition de caoutchouc siliconé comprend un copolymère résineux qui est une résine siliconée, qui est un composant organopolysiloxane contenant un groupe vinyle constitué principalement de motifs R³₃SiO_{1/2} et de motifs SiO₂ où R³ est un groupe hydrocarboné monovalent substitué ou non substitué ayant 1 à 10 atomes de carbone.

7. Matériau d'étanchéité selon la revendication 6, dans lequel le copolymère résineux a une masse moléculaire moyenne en masse équivalente au polystyrène M_{w}, basée sur une chromatographie d'exclusion diffusion (GPC), de 1 000 à 10 000.

8. Matériau d'étanchéité selon la revendication 6 ou 7, dans lequel le copolymère résineux est inclus dans la composition de caoutchouc siliconé en une quantité de 5 à 50 parties en poids pour 100 parties en poids de composant (A).

9. Matériau d'étanchéité selon l'une quelconque des revendications précédentes, dans lequel le composant organopolysiloxane (A) est choisi parmi les composés répondant à la formule de composition moyenne (I) :
R¹ₐSiO_{(4-a)/2} (I)
dans laquelle chaque R¹ est un groupe hydrocarboné monovalent substitué ou non substitué de 1 à 10 atomes de carbone, identique ou différent, et "a" est un nombre situé dans la plage allant de 1,5 à 2,8, et
dans lequel au moins 90 % de tous les groupes R¹ dans le composant organopolysiloxane (A), à l'exclusion des groupes alcényle, sont des groupes méthyle.

10. Utilisation d'un matériau d'étanchéité de l'une quelconque des revendications 1 à 9 pour réaliser un joint pour un séparateur de pile à combustible polymère solide.

11. Utilisation selon la revendication 10, comprenant l'application du matériau d'étanchéité sur au moins un côté d'un substrat de séparateur de pile à combustible polymère soluble, et le durcissement du matériau appliqué.

12. Joint de séparateur de pile à combustible polymère solide comprenant un matériau d'étanchéité de l'une quelconque des revendications 1 à 9 sous une forme durcie.

13. Séparateur de pile à combustible polymère solide pouvant être obtenu par formation d'un joint de la revendication 12 en tant que région d'étanchéité au niveau d'un bord périphérique sur au moins un côté d'un substrat de séparateur.

14. Pile à combustible polymère solide comprenant un séparateur scellé par un joint fait d'un matériau d'étanchéité durci selon l'une quelconque des revendications 1 à 9.

15. Pile à combustible polymère solide selon la revendication 14, qui comprend une membrane d'électrolyte contenant un polymère fluoré ayant des groupes acide sulfonique.
